(19) Europäisches Patentamt European Patent Office Office européen des brevets

(11) **EP 2 736 736 B1**

(12) **EUROPEAN PATENT SPECIFICATION**

(45) Date of publication and mention
of the grant of the patent:
**02.11.2016 Bulletin 2016/44**

(21) Application number: **11869769.7**

(22) Date of filing: **27.07.2011**

(51) Int Cl.:
**B60C 11/12** (2006.01)     **B60C 11/00** (2006.01)
**B60C 11/03** (2006.01)

(86) International application number:
**PCT/US2011/045484**

(87) International publication number:
**WO 2013/015799 (31.01.2013 Gazette 2013/05)**

(54) **TIRE WITH TREAD HAVING VARIABLE SIPE DENSITY AND ROUND CROWN**

REIFEN MIT EINER LAUFFLÄCHE MIT VARIABLER LAMELLENDICHTE UND KUGELFÖRMIGER KRONE

PNEUMATIQUE DOTÉ D'UNE BANDE DE ROULEMENT AYANT UNE DENSITÉ DE LAMELLES VARIABLE ET UN SOMMET ARRONDI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.06.2014 Bulletin 2014/23**

(73) Proprietors:
• **Michelin Recherche et Technique S.A.**
**1763 Granges-Paccot (CH)**
• **Compagnie Générale des Etablissements Michelin**
**63000 Clermont-Ferrand (FR)**

(72) Inventors:
• **GUICHON, Cyrill**
**F-63460 Beauregard-Vendon (FR)**

• **PIFFARD, Olivier**
**Mauldin, SC 29662 (US)**
• **THOMPSON, Ronald, Hobart**
**Greenville, SC 29615 (US)**

(74) Representative: **Casalonga**
**Casalonga & Partners**
**Bayerstraße 71/73**
**80335 München (DE)**

(56) References cited:
**EP-A1- 0 486 838      EP-A2- 0 477 542**
**JP-A- S63 134 313      US-A- 5 637 162**
**US-A- 5 738 740        US-B1- 6 460 585**
**US-B1- 6 571 844       US-B2- 6 820 666**
**US-B2- 7 032 637       US-B2- 7 172 001**

EP 2 736 736 B1

**Description**

BACKGROUND OF THE INVENTION

Field of the Invention

This invention relates generally to tires having treads that have a configuration and/or properties for maintaining hydroplaning performance, dry braking performance and improved wear resistance, and, more specifically, to a tire that has a tread that has a variable sipe density, i.c a higher sipe density in its central portion and a lower sipe density in its shoulder portions, as well as a round crown with a predetermined inflated profile droop. Another embodiment of the present invention further includes the addition of a member that provides more structural stiffness across the crown of a tire, such that better compromises between hydroplaning, dry braking, and wear performances can be obtained.

Description of the Related Art

Known tires are disclosed in EP-A-0477542, JP-A-63134313 and EP-A-0477542.

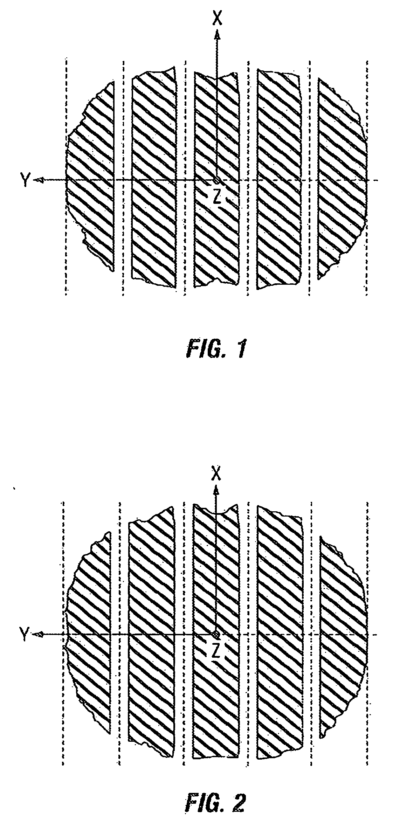

Those skilled in the art are familiar with the inherent compromise in designing a tire that has both a long wear life and a good hydroplaning performance. For example, a square footprint in the contact patch of a tire in use is usually considered to be optimal for achieving a long wear life. Such a footprint gives an equivalent rib length in the contact patch, which is generally needed in order to design a homogeneous rib stiffness in the longitudinal or X direction of the tire in each rib found across the entire width of the tread. This is desirable so that when a driving torque is applied to the tire, each rib experiences approximately the same amount of stress in the X direction of the tire. This equilibration of X stresses usually results in even wear across the ribs, which enhances the overall wear life of the tread of the tire. Such a square footprint is shown in Figure 1.

On the other hand, a rounder or oval footprint such as shown in Figure 2, is ideal for achieving good hydroplaning performance. Such a shape facilitates water evacuation around the tire footprint, similar in principle to the separation of water by the bow of a ship. This, in turn, results in a higher speed at which hydroplaning begins. However, this is usually deleterious to the wear performance because the center ribs in the contact patch are much longer than the shoulder ribs. This means that the X or longitudinal stiffness is higher in the center ribs than in the shoulder ribs. Hence, for a given torque applied to a wheel, the center rib will develop more stress in the X direction. As a consequence, the center rib will wear faster than the shoulder rib. So, uneven wear results with the center ribs wearing out before the shoulder. This phenomenon leads to a shorter wear life for the tread of a tire.

Currently, there are various ways to improve the hydroplaning performance or wear performance of the tire that are in contradiction to each other. Modifying the footprint as described above is one solution that usually improves one performance while adversely affecting the other performance. Similarly, a tire designer can add more void to the tread by adding more longitudinal grooves or increasing the void of such grooves to improve the hydroplaning performance of the tire, but this will result in less contact surface area in the contact patch, which leads to greater X stresses and quicker wear of the tread. Likewise, a tire designer can improve the wear performance of a tread by modifying the properties of the tread compound. For example, a higher modulus compound may be more resistant to wear yet lead to poorer performance in dry braking.

Accordingly, it is desirable to find a construction for the tread of a tire that is able to maintain an equivalent wear rate across the entire tread band, while at the same time maintaining the hydroplaning performance of the tire. In addition, it would be advantageous if the solution maintained the dry traction performance as well.

SUMMARY OF THE INVENTION

In one embodiment, the present invention includes a tire according to claim 1. The tread has central and shoulder regions and tread elements that are located in its central and shoulder regions. The distance from one sipe to an adjacent sipe in a tread element found in the center region is in the range of 5 - 9 mm and the distance from one sipe to an adjacent sipe in a tread element found in a shoulder region is in the range of 15 - 35 mm. At the same time, the inflated profile droop is in the range of 5 - 9 mm as measured from the center of the tread to an edge of the rolling tread width.

In some embodiments, a tire using this variable sipe density and inflated profile droop further comprises a profiled undertread having at least 1 mm thickness reduction from the shoulder region of the undertread to the center region of the undertread and a modulus increase of at least three times that of the tread robber and in some cases the thickness reduction is actually 2 mm and the modulus increase is at least four times that of the tread rubber. When a profiled undertread is used, the tire may further comprise first, second and third breaking belts wherein the angle of the cords of the third belt are posed at an angle of at least 60 degrees with respect to the longitudinal direction of the tire. The third belt may also have a modulus in compression of at least 30,000 MPa and a width that ranges from being as wide as the second belt to being 45 mm less in width as the second belt and may actually be 30 mm less than the width of the second belt. This third belt may be laid radially outward of the second belt. In certain cases, the angle of the cords range from 65 to 90 degrees. In some embodiments, the cords are made from a composite reinforcement of glass and resin.

In some tire applications, the size of the tire using this variable sipe density and inflated profile droop is a 205/55R16 sized tire or a 245/45R17 sized tire. In some cases when the tire is a 205/55R16 sized tire, the crown radius of the tread is 650 nun when inflated. In other cases when the tire is a 245/45R17 sized tire, the crown radius of the tread is 450 mm when inflated.

In certain embodiments when a variable sipe density is used, the distance from one sipe to an adjacent sipe found in the center region of the tread is 6 nun and the distance from one sipe to an adjacent sipe in a tread element found in the shoulder region of the tread is 20 mm. The tread elements may be tread blocks or ribs.

The foregoing and other objects, features and advantages of the invention will be apparent from the following more detailed descriptions of particular embodiments of the invention, as illustrated in the accompanying drawing wherein like reference numbers represent like parts of the invention.

## DETAILED DESCRIPTION OF THE DRAWINGS

FIG. **1** is an example of a square footprint of a tire that is usually considered best for wear performance of the tire;

FIG. **2** is an example of a rounded or oval footprint of a tire that is usually considered best for hydroplaning performance of the tire;

FIG. **3** is a sectional view of half of a tire that has a standard construction with an undertread that is not profiled;

FIG. **4** is a sectional view of half of a tire that has an improved construction according to an aspect of the present invention with an undertread that is profiled;

FIG. **5** depicts the relative contributions to the shear stiffness of the summit of a tire of the tread and undertread;

FIG. **6** is a graph showing the nonlinear relationship between the B/H ratio of the tread elements of the tire to a softening coefficient K as calculated by Eq. 4;

FIG. **7** is partial top view of a tread that exhibits variable sipe density according to an aspect of the present invention;

FIG. **8** is a graph showing the non-linear relationship between inter-sipe distance and snow traction;

FIG. **9** is a footprint of the tread that has variable sipe density that is shown in FIG. 7;

FIG. **10** is a graph showing the X forces experienced by each of the ribs of the tread of FIG. 7;

FIG. **11** is a footprint of a tire that does not have a profiled undertread and that has rounded shape that is well suited for good hydroplaning performance of a tire;

FIG. **12** is a footprint of a tire that does have a profiled undertread and that has a rounded shape that is well suited for good hydroplaning performance of a tire;

FIG. **13** is a graph showing the relative X stiffness of the ribs of the tires illustrated in FIGS. **10** and **11**;

FIG. **14** is a sectional view of a half a tire that has a third breaking belt according to another aspect of the present invention located outwardly in the Z direction from first and second breaking belts;

FIG. **15** is a sectional view of is half a tire that has a reinforcing ply located adjacent the carcass below first and second breaking belts;

FIG. **16** is a drawing produced using FEA simulation that shows the increased stiffness of the tread that is supplied by using a suitably configured third breaking belt;

FIG. **17** is FEA results that show the compression experienced by the third breaking belt when the tread encounters water; and

FIG. **18** is a graph produced by FEA that shows a predicted improvement in hydroplaning performance between a tire that has and does not have a third breaking belt that is suitably configured.

## DEFINITIONS

By tread element, it is meant any type or shape of a structural feature found in the tread that contacts the ground. Examples of tread elements include tread blocks and ribs.

By rib, it is meant a tread element that runs substantially in the longitudinal direction **X** of the tire and that is not interrupted by any grooves that run in a substantially lateral direction **Y** or any other grooves oblique thereto.

By tread block, it is meant a tread element that has a perimeter that is defined by one or more grooves, creating an isolated structure in the tread.

The longitudinal or circumferential direction, **X,** is the direction of the tire along which it rolls or rotates and that is perpendicular to the axis of rotation of the tire.

The lateral direction, **Y,** is the direction of the tire along the width of its tread that is substantially parallel to the axis of rotation of the tire. However, by lateral groove, it is meant any groove whose general direction or sweep axis forms an angle with the purely lateral direction that is less 45 degrees.

The radial direction, **Z,** is the direction of a tire as viewed from its side that is parallel to the radial direction of the generally annular shape of the tire and is perpendicular to the lateral direction thereof.

By central tread element, it is meant any tread element located within the central 60% of the width of the tread that contacts the road during the normal use of the tire. By shoulder tread element, it is meant any tread element located within the outer 40% of the width of the tread that contacts the road during normal use of the tire. For a symmetrical tread, the shoulder regions constitute the outer 20% of the width of the tread on either side of the midplane of the tire. For a tread having five ribs of substantially equal width in the lateral Y direction of the tire, the middle three ribs are the central ribs and the outer two ribs are the shoulder ribs. It is contemplated that these regions can be adjusted depending on other factors, such as where driving or positive forces and braking or negative forces are typically experienced on a tire during normal use.

## DETAILED DESCRIPTION OF PARTICULAR EMBODIMENT

Embodiment of the present invention include constructions that modify the stiffness of the tread elements found on the tread of a tire in order to break the compromise found between wear and hydroplaning performances. In certain instances, dry traction is also maintained. It should be noted that one, all or any combination of the embodiments discussed below may be satisfactory to achieve these desired performances depending on the application. Also, these techniques can be used on a host of tread elements including tread blocks and ribs.

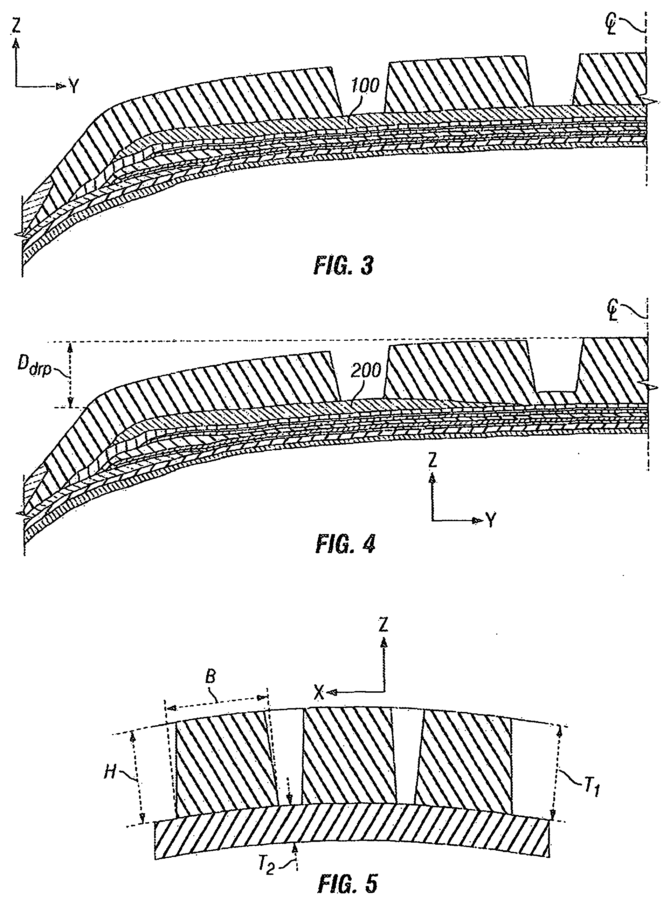

Looking at Figures **3** and **4,** half of a standard tread construction for a 205/55R16 sized tire that does not have a profiled undertread **100** and half of one that docs have a profiled undertread **200** for a 205/55R16 sized tire according to an aspect of the present invention are shown respectively. The tires discussed herein and that are depicted in Figures **3** and **4,** define longitudinal **X,** lateral **Y,** and radial **Z** directions. As will be explained later, the shape and properties of this improved undertread **200** help to equilibrate the tread element stiffnesses in the longitudinal or **X** direction across the width of the tread. This allows the creation of a rounder footprint for improved hydroplaning performance without increasing X forces/stresses in the central tread elements that lead to a shortened wear life of the tread of the tire. Focusing on Figure **3,** an undertread **100** that has a relatively constant thickness of 2.2 mm and a modulus of extension that is relatively close to that of the tread is shown. To the contrary, the undertread **200** of Figure **4** has thickness of 2.2 mm in the shoulder regions, which tapers to zero as it approaches the centerline **C$_L$** of the tire. The modulus of this undertread is at least three times, and preferably four times that of the tread rubber. The advantage of this construction is as follows.

The goal of the inventor in using this construction is to enable the creation of a footprint optimized for hydroplaning, as shown in Figure **2,** all the while maintaining equivalent rib stiffnesses. The variable thickness, high modulus undertread is an enabling design element. Such an undertread increases the shear stiffness in the **X-Z** plane in the shoulder region, which has an effect on the X forces/stresses experienced by the associated tread elements as will be described later. With reference to Figure **5,** the **X-Z** shear stiffness of the tread and undertread composite, $G_{eq}$, can be approximated by Eq. 1:

$$G_{eq} = \frac{T_1 + T_2}{\dfrac{T_1}{G_1} + \dfrac{T_2}{G_2}} \qquad Eq.1 \quad ;$$

where **T$_1$** is the thickness of the tread in the **Z** direction, $G_1$ is the shear stiffness or modulus of the tread, **T$_2$** is the thickness of the undertread in the **Z** direction, and $G_2$ is the shear stiffness or modulus of the undertread.

In like fashion, the rib stiffness in the X direction, $K_x$; can then be equated for each tread element, using Eq. 2:

$$K_x = G_{eq} \frac{L * W * CSR}{T_1 + T_2} \qquad Eq.2 \quad ;$$

where L is the length of the tread element in the **X** direction, W is the width of the tread element in the **Y** direction, **T$_1$** is the thickness of the tread in the **Z** direction, **T$_2$** is the thickness of the undertread in the **Z** direction and CSR is the contact surface ratio of rubber of the tread element to the apparent area in the contact patch of the tread.

In addition, the inventor used another technique for modifying the tread element stiffness in the **X** direction.

This involves the use of siping in the tread element to change the shear stiffness, $G_1$, of the tread element in the following manner. This shear stiffness or modulus can be calculated by Eq. 3:

$$GI = \frac{G_{rubber}}{K} \qquad Eq.3 \quad ;$$

where $G_{rubber}$ is the shear modulus of the isotropic rubber used in the tread element and K is a softening factor that accounts for additional bending compliance. This can be computed using Eq. 4:

$$K = 1 + \frac{2}{9(B/H)^2} \qquad Eq.4 \quad ;$$

where **B** is the base dimension of the tread element in the **X** direction and **H** is the height dimension of the tread element in the **Z** direction.

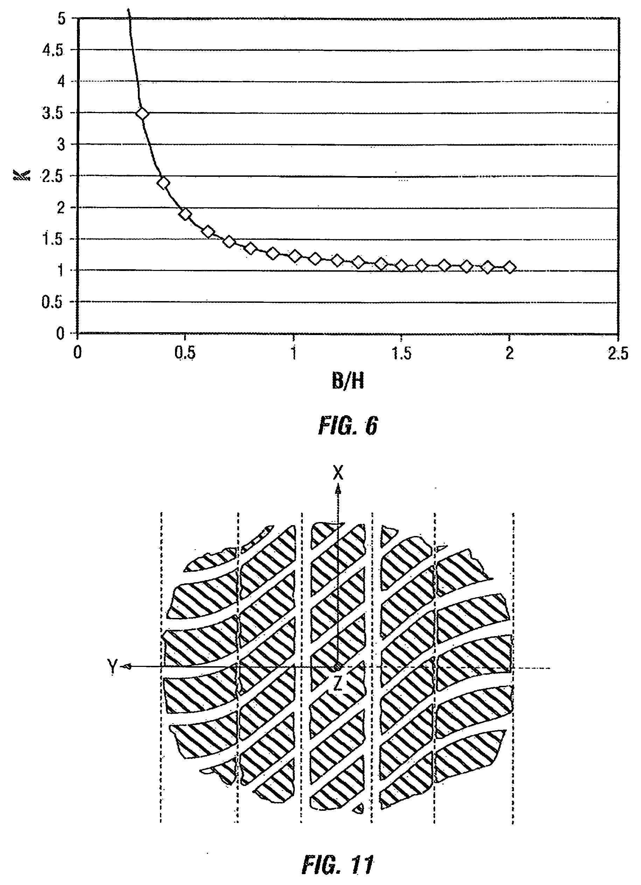

Figure 6 shows a graph that depicts the relationship of K versus B/H as calculated using Eq. 4. For ratios of B/H that are greater than 2 (for example, a tread block that has a base dimension of 16 mm and a height dimension of 8 mm), there is almost no softening of the tread due to bending. However, for a ratio of B/H of .5, K is about 1.9 meaning that the equivalent shear stiffness $G_1$ will be reduced almost by a factor of 2 compared to what it would have been if the tread element were a solid rib.

This technique can be applied to ribs and tread blocks alike. When applied to a rib, the base dimension is the distance from one sipe to an adjacent sipe found within the rib. When applied to a tread block, the base dimension is the distance from one sipe to an adjacent sipe found within the tread block or to a groove that defines the edge of a tread block.

This technique can be used to make each tread element have equivalent shear stiffness for even wear. If the B/H relationship is the same for each tread element across the width of the tread in the Y direction, then the length of each of these tread elements in the contact patch must be the same and a square shaped contact patch is imposed. This is leads to a poor resistance to hydroplaning for the tire. When the B/H ratio is greater in the shoulder tread element as compared to the central tread element, then the length of the shoulder tread element in the contact patch can be reduced as compared to the length of the central tread element, while still maintaining an equivalent shear stiffness between these tread elements. Thus, a rounder footprint, can be used that is good for hydroplaning performance without degrading wear performance.

For example, a central tread element in the form of a rib can have the following dimensions: H = $T_1$ = 8 mm and B/H = .6. Then, as indicated by Figure 4, K = 1.6 given that $T_2$ = 2 mm and G = 1 MPa and W = 20 mm while CSR = .8. Then using Eqs, 1 thru 3, the center rib stiffness $K_{x\,ctr}$ = 1.08 $L_{ctr}$. Using the same CSR and width for a shoulder tread element that also takes the form of rib, but using a B/H ratio that equals 2, K becomes 1.05 from Figure 4. Again, using Eqs. 1 thru 3, $K_{x\,shl}$=1.53 $L_{shl}$. Since it is desirable that $K_{x\,shl}$ should equal $K_{x\,ctr}$, we can compute that $L_{shl}$ = .71 $L_{ctr}$. So for this example, the shoulder rib can be 29% shorter in the contact patch than the center rib, giving a rounder footprint which is better for hydroplaning performance while even tread wear performance is maintained.

**Embodiment I - Variable Sipe Density**

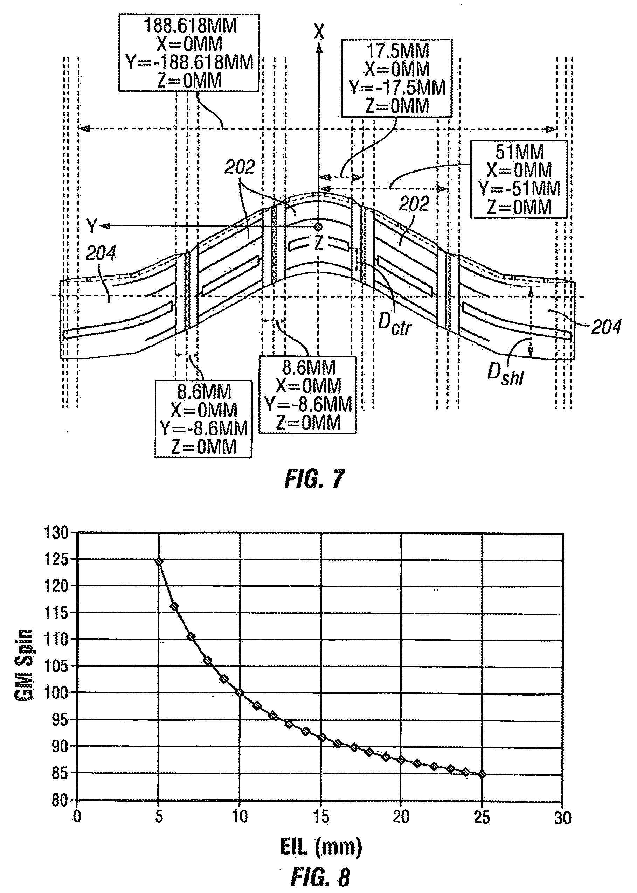

As just discussed, by decreasing the sipe density in the shoulder tread element, compared to the central tread elements, one can preferentially stiffen the shoulder tread clement and soften the central tread elements. Figure 7 shows an example of this applied to a tire having five ribs. The distance, $D_{ctr}$, from sipe to an adjacent sipe for the centrale ribs 202 was about 5.5 mm while the distance, $D_{shl}$, from sipe to an adjacent sipe for the shoulder ribs 204 was about 25 mm. This shape is relatively square, but can be made more rounded by adding a suitably inflated droop, $D_{drp}$, of approximately 5 - 9 mm (see Figure 4 to see how this is measured). Usually, the droop can be adjusted in order to make the length of the shoulder tread element 70 - 80% of the length of the central tread element so that improved hydroplaning performance can be maintained. Therefore, this embodiment primarily shows the ability of a variable sipe density to improve wear characteristics. Additional embodiments will show how this can be combined with other design elements, such as a rounder crown, to simultaneously improve hydroplaning performance.

In addition to helping break the compromise between wear and hydroplaning performances, a variable sipe density is also useful for breaking the compromise between snow and dry traction. Figure 8 depicts the relationship between inter-sipe distance or EIL (x axis) and snow traction performance or GM spin (y axis). This relationship is not linear, which means that having central ribs with a small distance between sipes helps to gain snow traction while having a large distance between sipes on the shoulder ribs, which usually carries more load in dry braking, helps improve dry traction. Consequently, there is a better compromise between snow and dry traction by using a variable sipe density between the shoulder and central portions of the tire.

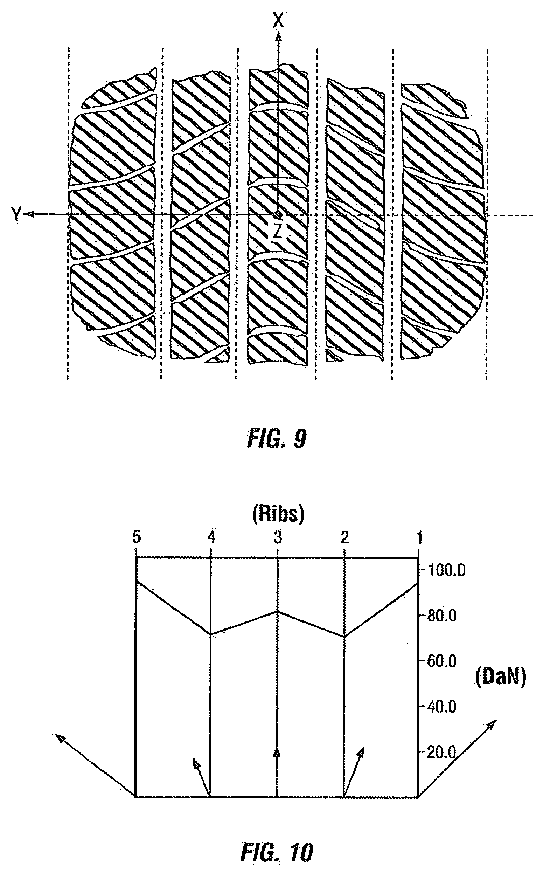

Tires using the tread pattern shown in Figure 7 were made and tested to find the forces in the contact patch and they were also tested in wear performance against a witness tire. Figure **9** shows the actual tire footprint of the tread having a variable sipe density for a vertical Z load of 420 DaN and an inflation pressure of 2.2 bars. The center sipes are not seen in the ink print because they are closed when they where in the contact patch. The measured X forces in the contact area are shown in Figure 10 for the caste where the total X force applied to the tire was 100 DaN. Note that the shoulder ribs developed stronger driving forces than the center ribs, indicating that an improvement in tread wear should be achievable.

These tires were tested in wear against a current production tire that is also a 205/55R16 sized tire. Even though the current production tire had a tread depth of 9 mm versus an 8 mm tread depth for the tires having a variable sipe density, the tires having a variable sipe density exhibited a 8% improvement in the development of medium severity wear as compared to the current production tire. Furthermore, there was a 17% improvement in the development of high severity wear as well. The crown radius of this sized tire was 450 mm.

Similar results were obtained for a 245/45R17 fire using FEA simulations that had similar variations in sipe density. For this scenario, there is a 20% increase in rolling tread-width and little change in section height, but the variation in sipe density as well as an inflated droop profile, as discussed above were about the same. The crown radius of this sized tire was 650 mm. This shows the versatility of the present invention.

## Embodiment II - Profiled Undertread with a Variable Sipe Density and a Round Crown

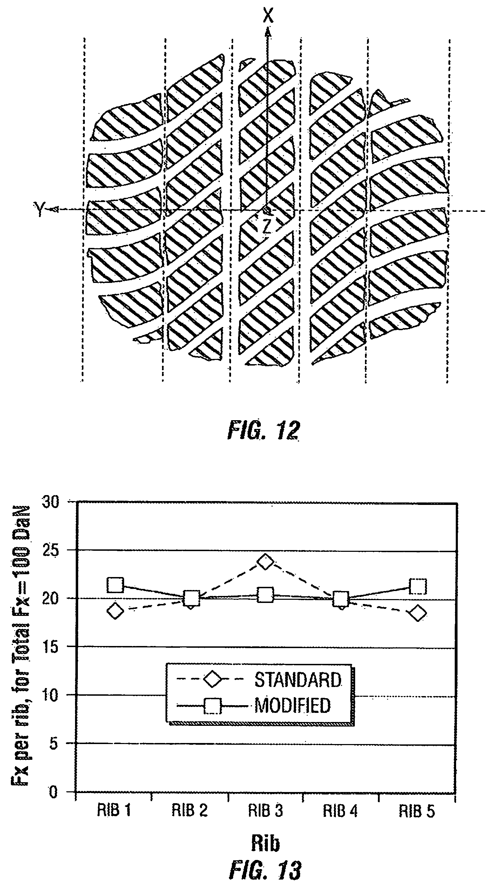

Tires that have the architectures shown in the cross-sectional views of Figures 3 and 4 were manufactured and tested. The tread design of these tires also included a variable sipe density where $D_{shl}$ was 24 mm and $D_{ctr}$ was 5 mm (see Figure 7 to see how these dimensions are measured). The resulting footprint of the standard design of Figure 3 is shown in Figure **11.** This shape is fairly round for providing good hydroplaning performance, as the central rib is significantly longer than the shoulder rib. In like fashion, the resulting footprint of the design having a profiled undertread of Figure **4** is shown in Figure **12.** This footprint is also fairly round with the central rib showing an increased length as compared to the shoulder rib. This indicates that hydroplaning performance for the two tires is substantially similar. For the modified design, the undertread modulus was about 12 MPa whereas the tread modulus was around 3 MPa. Hence, the undertread modulus was about four times as much as the tread modulus.

Turning now to Figure **13,** the rib stiffness of the standard architecture with variable sipe density and the modified architecture with variable sipe density is shown across the width of the tire tread. The graph gives the X force per rib carried for the case of a total X force of 100 DaN. As can be seen, the standard architecture has higher X force in the central rib as compared to the modified architecture. The center rib X force is about 21% higher than the shoulder rib X force, yet the center rib length is 31% longer than the shoulder rib length. Even with this standard architecture, the variable sipe density tread design gives a moderate improvement in the rib stiffness homogeneity. Nevertheless, those skilled in the art will recognize that the higher X center force indicates probable center wear on the drive axle of a front wheel or rear wheel drive of a vehicle. On the other hand, when the modified architecture is superimposed with the variable sipe density, the more homogeneous force distribution of Figure **13** results. In fact, the shoulder ribs are carrying slightiy more force than the center three ribs. Again, those skilled in the art will recognize that this ins preferential for reducing an irregular form of wear, called "heel/toe" wear. To have a a stiffer shoulder rib, in the context of a round footprint, is a unique and advantageous benefit of the invention as described herein.

## Embodiment III - Addition of a Third Breaker Belt

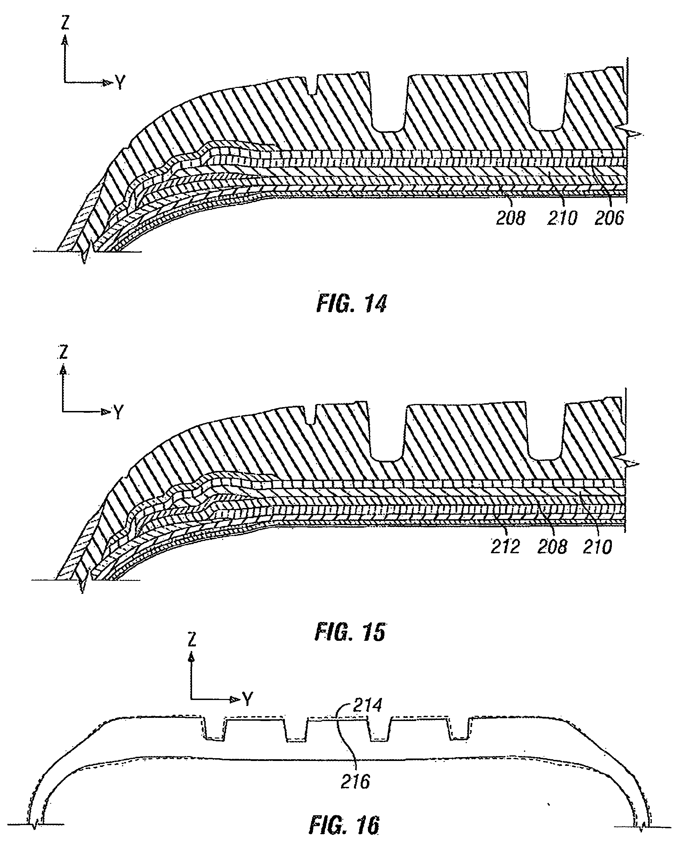

In some tire applications, it is beneficial to use a soft tread rubber as this helps tire performances such as traction. However, this can have a negative impact on hydroplaning performance as this makes the tread more pliable. Accordingly, the inventor tested tires that had a third breaking **belt 206,** located outward radially in the **Z** direction from the first and second belts **208, 210** (see Figure **14)** to see if this could offset the loss of hydroplaning performance associated with a softer tread rubber while allowing the gain in traction to still be realized.

As shown by table 1, five scenarios were tested. The first scenario was a reference tire with a tread rubber of average modulus. The second scenario was a tire with a tread rubber that was softer or that had a lower modulus than the reference tire. The third scenario used a tire that was essentially the same as that used in the second scenario except that a third breaking belt was added. The construction of this tire is shown in Figure 14 and uses cords that are posed at 65 degrees from the X direction of the tire. The fourth scenario uses a tire that is constructed similarly to the reference tire except that the third belt was added like that of the third scenario. The fifth scenario, as shown by Figure **15,** used a tire having a soft tread rubber such as that used in the second scenario except that a reinforcing ply **212** with cords posed at 90 degrees from the X direction or parallel to the **Y** direction of the tire was added below the first and second breaking belts **208, 210** near the carcass.

TABLE 1

| Scenario | First | Second | Third | Fourth | Fifth |
|---|---|---|---|---|---|
| Construction | Reference | Soft Tread Rubber | Second scenario plus third breaking belt | First scenario plus third breaking belt | Second scenario plus reinforcing found below first and second belts |
| Hydroplaning Performance | 100% | 94% | 99% | 103% | 94% |

As expected, testing of the second scenario showed a decrease in the hydroplaning performance of 6%. However, the addition of a third breaking belt unexpectedly increased the hydroplaning performance by 3 to 5% as evidenced by the test results of scenarios 3 and 4. This gives the tire designer the option of improving traction and compensating for the loss in hydroplaning performance by adding the third breaking belt or to improve hydroplaning performance alone when using a tread rubber of average modulus. The last scenario shows that the location of the reinforcing ply helps to provide these critical results as no improvement was shown by adding a reinforcing ply near the carcass.

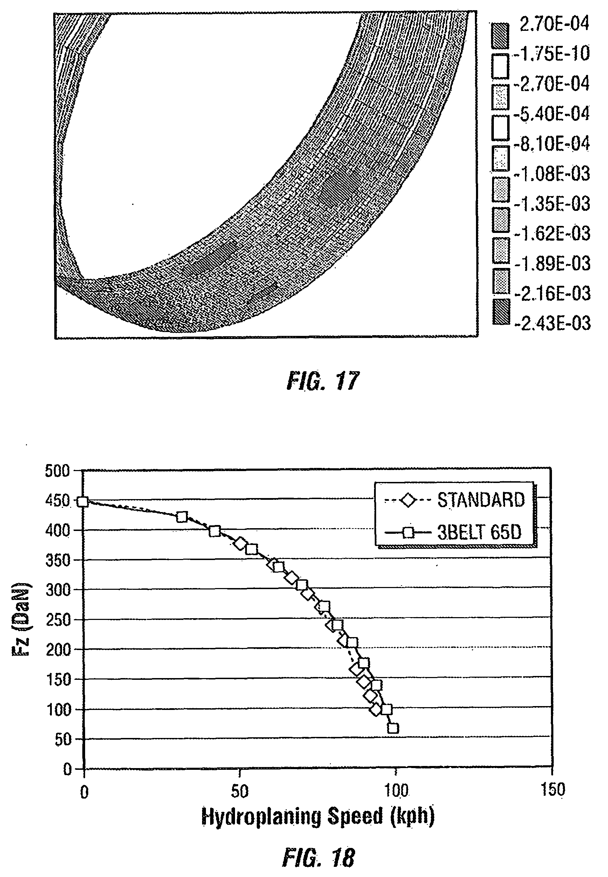

The inventor proceeded to investigate these surprising results using FEA modeling, Figures **16** and **17** show that the third belt creates a structural reinforcement in the **Y-Z** plane that helps the tread to deform less when it encounters water (improved tread is shown by dashed lines **214** in Figure **16** while the standard tread is shown in solid lines **216**) as compared to the standard tread lacking the third belt, helping the tire to stay in contact with the ground and resist hydroplaning. It should be noted from Figure **17** that the third breaking belt is undergoing compressive strain while resisting hydroplaning so a suitable compressive modulus should be present in the third belt in order to gain this benefit. Testing has revealed, that a compressive modulus of at least 30,000 MPa should be used to get this benefit. A monolithic cross-section of a composite reinforcement, such as glass and resin, may used in the cords of the third belt to achieve the desirable compressive modulus.

Likewise, modeling has shown that the width of the third belt does not have to be the same as the second belt and may be up to **45** mm less in width, For this particular embodiment, the width of the belt was 30 mm less than the width of the second belt. Also, nylon reinforcement that is used to help prevent belt separation and that is wound in the X direction of the tire needs only to be located in the shoulder regions of the tread. Also, the angles at which the cords of the third ply may be oriented with respect to the X direction can range from 60 to 90 degrees.

Finally, Figure **18** shows that the improvement in hydroplaning performance using a third belt predicted by the simulation is a few percent. This validates the accuracy and reliability of the model to design for real world tire applications since the modeling results match real world tire testing data.

As can be seen, certain embodiments of the present invention help to break the compromise between hydroplaning and wear performances and/or snow and dry traction performances either in combination or by themselves. Accordingly, different combinations of embodiments discussed herein are envisaged by the inventor and are considered part of this disclosure and may be useful for different tire applications.

While this invention has been described with reference to particular embodiments thereof, it stall be understood that such description is by way of illustration and not by way of limitation. For example, the present invention could be combined with material properties of the tread rubber to yield further improvements. Similarly, this invention can be applied to tires having all sorts of tread elements including ribs and tread blocks. Furthermore, particular dimensions have been given but it is well within the purview of one skilled in the art to make adjustments to these dimensions and still practice the present invention. Accordingly, the scope and content of the invention are to be defined only by the terms of the appended claims.

**Claims**

1. A tire that comprises a tread, the tire defining lateral (Y) and longitudinal (X) directions, said tread having central and shoulder portions and tread elements with sipes that are located in its central, and shoulder regions, a profiled undertread (100, 200) and a first, second and third breaking belt (208, 210, 206), wherein:

   the longitudinal distance (Dctr) from one sipe to an adjacent sipe in a tread element found in the center region is in the range of 5 - 9 mm;
   the longitudinal distance (Dshl) from one sipe to an adjacent sipe in a tread element found in a shoulder region is in the range of 15 - 35 mm;

the inflated profile droop (Ddrp) is in the range of 5 - 9 mm as measured from the center of the tread to an edge of the rolling tread width; and

the profiled undertread has at least 1 mm thickness reduction from a shoulder region of the profiled undertread to a center region of the profiled undertread.

2. The tire of claim 1 wherein the profiled undertread has a modulus increase of at least three times that of the tread rubber.

3. The tire of claim 2 wherein the angle of the cords of the third belt are posed at an angle of at least 60 degrees with respect to the longitudinal direction of the tire, said third belt having a modulus in compression of at least 30.000 MPa and having a width that ranges from, being as wide as the second belt to being 45 mm less in width as the second belt, said third ply also being laid radially outward of the second belt.

4. The tire of claim 1 wherein said tread is used with a 205/55R16 sized tire.

5. The tire of claim 1 wherein said tread is used with 245/45R17 sized tire.

6. The tire of claim 4 wherein the crown radius of said tread is 650 mm when inflated.

7. The tire of claim 5 wherein the crown radius of said tread is 450 mm when inflated.

8. The tire of claim 2 wherein the thickness reduction from the shoulder region of the undertread to the shoulder is at least 2 mm and the modulus increase is at least four times that of the tread rubber.

9. The tire of claim 3 wherein the angle at which the cords are posed from the longitudinal direction of the tire ranges from 65 to 90 degrees.

10. The tire of claim 3 wherein the cords of the third belt comprise a composite reinforcement made from glass and resin.

11. The tire of claim 3 wherein the width of the third belt is 30 mm less than the width of the second belt.

12. The tire of claim 1 wherein the distance from one sipe to an adjacent sipe is a tread element, found in the center region of the tread is 6 mm and the distance from one sipe to an adjacent sipe in a tread element found in the shoulder region of the tread is 20 mm.

13. The tire of claim 1, wherein the tread elements are blocks.

**Patentansprüche**

1. Reifen, welcher ein Profil beinhaltet, der Reifen definiert laterale (Y) und longitudinale (X) Richtungen, besagtes Profil hat Zentral- und Schulterabschnitte und Profilelemente mit Lamellen, welche in dessen Zentral- und Schulterregionen gelegen sind, einen profilierten Zwischenbau (100, 200) und eine erste, zweite und dritte Bruchzone (208, 210, 206), wobei:

der longitudinale Abstand (Dctr) von einer Lamelle zu einer benachbarten Lamelle in einem Profilelement, welches sich in der Zentralregion befindet, im Bereich von 5 - 9 mm ist;

der longitudinale Abstand (Dshl) von einer Lamelle zu einer benachbarten Lamelle in einem Profilelement, welches sich in einer Schulterregion befindet, im Bereich von 15 - 35 mm ist;

der aufgeblasene Profildroop (Ddrp), gemessen von der Mitte des Profils zu einem Rand der rollenden Profilbreite, im Bereich von 5 - 9 mm ist; und

der profilierte Zwischenbau mindestens 1 mm Dickenabnahme von einer Schulterregion des profilierten Zwischenbaus zu einer Zentralregion des profilierten Zwischenbaus hat.

2. Reifen nach Anspruch 1, wobei der profilierte Zwischenbau einen Modulanstieg von mindestens dreimal dem des Profilkautschuks hat.

**3.** Reifen nach Anspruch 2, wobei die Bänder der dritten Zone in einem Winkel von mindestens 60 Grad im Hinblick auf die longitudinale Richtung des Reifens posiert sind, wobei besagte dritte Zone unter Druck ein Modul von mindestens 30,000 MPa hat und eine Breite, welche von der Breite der zweiten Zone bis zu einer 45 mm geringerer Breite als die zweite Zone reicht, wobei besagte dritte Zone auch radial auswärts der zweiten Zone gelegen ist.

**4.** Reifen nach Anspruch 1, wobei besagtes Profil mit einem 205/55R16 großen Reifen benutzt wird.

**5.** Reifen nach Anspruch 1, wobei besagtes Profil mit einem 245/45R17 großen Reifen benutzt wird.

**6.** Reifen nach Anspruch 4, wobei der Laufflächenradius des besagten Profils, wenn aufgeblasen, 650 mm ist.

**7.** Reifen nach Anspruch 5, wobei der Laufflächenradius des besagten Profils, wenn aufgeblasen, 450 mm ist.

**8.** Reifen nach Anspruch 2, wobei die Dickenabnahme von der Schulterregion des Zwischenbaus zur Schulter mindestens 2 mm ist und der Modulanstieg mindestens viermal dem des Profilkautschuks ist.

**9.** Reifen nach Anspruch 3, wobei der Winkel, bei dem die Bänder von der longitudinalen Richtung des Reifens posiert sind, von 65 bis 90 Grad reicht.

**10.** Reifen nach Anspruch 3, wobei die Bänder der dritten Zone eine zusammengesetzte Verstärkung aus Glas oder Harz beinhalten.

**11.** Reifen nach Anspruch 3, wobei die Breite der dritten Zone 30 mm geringer ist als die Breite der zweiten Zone.

**12.** Reifen nach Anspruch 1, wobei der Abstand von einer Lamelle zu einer benachbarten Lamelle in einem Profilelement, welches sich in der Zentralregion des Profils befindet, 6 mm ist und der Abstand von einer Lamelle zu einer benachbarten Lamelle in einem Profilelement, welches sich in der Schulterregion des Profils befindet, 20 mm ist.

**13.** Reifen nach Anspruch 1, wobei die Profilelemente Blöcke sind.


**Revendications**

**1.** Pneumatique comprenant une bande de roulement, le pneumatique définissant des directions latérale (Y) et longitudinale (X), ladite bande de roulement ayant des parties centrales et d'épaulement et des éléments de bande de roulement pourvus de lamelles qui sont situés dans ses régions centrale et d'épaulement, une sous-chape profilée (100, 200) et une première, deuxième et troisième ceinture de rupture (208, 210, 206), dans lequel :

la distance longitudinale (Dctr) d'une lamelle à une lamelle adjacente dans un élément de bande de roulement qui se trouve dans la région centrale est comprise dans l'intervalle de 5 à 9 mm ;
la distance longitudinale (Dshl) d'une lamelle à une lamelle adjacente dans un élément de bande de roulement qui se trouve dans une région d'épaulement est comprise dans l'intervalle de 15 à 35 mm ;
la flexion en charge du profil gonflé (Ddrp) est comprise dans l'intervalle de 5 à 9 mm lorsqu'elle est mesurée du centre de la bande de roulement à un bord de la largeur de bande de roulement ; et
la sous-chape profilée a une réduction d'épaisseur d'au moins 1 mm d'une région d'épaulement de la sous-chape profilée à une région centrale de la sous-chape profilée.

**2.** Pneumatique selon la revendication 1, dans lequel la sous-chape profilée a une augmentation de module au moins trois fois égale à celle du caoutchouc de la bande de roulement.

**3.** Pneumatique selon la revendication 2, dans lequel les fils câblés de la troisième ceinture sont posés en formant un angle d'au moins 60 degrés par rapport à la direction longitudinale du pneumatique, ladite troisième ceinture ayant un module de compression au moins égal à 30 000 MPa et ayant une largeur qui va d'une valeur égale à la largeur de la deuxième ceinture à une valeur inférieure de 45 mm à la largeur de la deuxième ceinture, ladite troisième nappe étant aussi posée radialement à l'extérieur par rapport à la deuxième ceinture.

**4.** Pneumatique selon la revendication 1, dans lequel ladite bande de roulement est utilisée avec un pneumatique de dimensions 205/55R16.

**5.** Pneumatique selon la revendication 1, dans lequel ladite bande de roulement est utilisée avec un pneumatique de dimensions 245/45R17.

**6.** Pneumatique selon la revendication 4, dans lequel le rayon au sommet de ladite bande de roulement vaut 650 mm lorsque le pneumatique est gonflé.

**7.** Pneumatique selon la revendication 5, dans lequel le rayon au sommet de ladite bande de roulement vaut 450 mm lorsque le pneumatique est gonflé.

**8.** Pneumatique selon la revendication 2, dans lequel la réduction d'épaisseur de la région d'épaulement de la sous-chape à l'épaulement vaut au moins 2 mm et l'augmentation de module vaut au moins quatre fois celle du caoutchouc de la bande de roulement.

**9.** Pneumatique selon la revendication 3, dans lequel les fils câblés sont posés en formant un angle de 65 à 90 degrés par rapport à la direction longitudinale.

**10.** Pneumatique selon la revendication 3, dans lequel les fils câblés de la troisième ceinture comprennent un renforcement composite fait de verre et de résine.

**11.** Pneumatique selon la revendication 3, dans lequel la largeur de la troisième ceinture vaut 30 mm de moins que la largeur de la deuxième ceinture.

**12.** Pneumatique selon la revendication 1, dans lequel la distance d'une lamelle à une lamelle adjacente dans un élément de bande de roulement, qui se trouve dans la région centrale de la bande de roulement, vaut 6 mm, et la distance d'une lamelle à une lamelle adjacente dans un élément de bande de roulement qui se trouve dans la région d'épaulement de la bande de roulement vaut 20 mm.

**13.** Pneumatique selon la revendication 1, dans lequel les éléments de bande de roulement sont des pavés.

**FIG. 1**

**FIG. 2**

**FIG. 3**

**FIG. 4**

**FIG. 5**

FIG. 6

FIG. 11

188.618MM
X=0MM
Y=-188.618MM
Z=0MM

17.5MM
X=0MM
Y=-17.5MM
Z=0MM

51MM
X=0MM
Y=-51MM
Z=0MM

*202*

*204*

$D_{ctr}$

*204*

$D_{shl}$

8.6MM
X=0MM
Y=-8.6MM
Z=0MM

8.6MM
X=0MM
Y=-8.6MM
Z=0MM

*FIG. 7*

*FIG. 8*

**FIG. 9**

**FIG. 10**

**FIG. 12**

Rib

**FIG. 13**

**FIG. 14**

**FIG. 15**

**FIG. 16**

FIG. 17

FIG. 18

**EP 2 736 736 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0477542 A
- JP 63134313 A